# EUROPEAN PATENT APPLICATION

(11) **EP 0 949 835 A2**
(43) Date of publication of application: **13.10.1999**
(21) Application number: 99107036.8
(22) Date of filing: 09.04.1999
(51) Int. Cl.: H04Q 7/38

(54) **Handoff method between a CDMA and another cellular system**

(30) Priority: 10.04.1998 JP 9921498; 12.03.1999 JP 6608999
(71) Applicant: NEC CORPORATION, Tokyo (JP)
(72) Inventor: Kubota, Hiroshi, c/o NEC Corporation, Minato-ku, Tokyo (JP)
(74) Representative: VOSSIUS & PARTNER

(57) **Abstract**

In a combined mobile communication network of a CDMA cellular system and other type of cellular system, a handoff method which is capable of promoting a success rate of the handoff operation from the CDMA cellular system to the other type of cellular system and maintaining stable communication quality is provided. A handoff determining data is provided in a base station control apparatus of the CDMA cellular system. This data has been predetermined and contains optimum conditions for performing the handoff from the CDMA base station to the other type of base station for each cell of the CDMA cellular system. When the mobile terminal requests the handoff in a cell of the CDMA cellular system, the base station control apparatus compares measured signal level data of adjacent base stations, which was reported with the handoff request from the mobile terminal, with the handoff determining data. The handoff from the CDMA base station to the other base station is executed only when conditions of measured signal level of adjacent base stations satisfy the conditions defined by the handoff determining data.

## Description

The present invention relates to a handoff method in a combined mobile communication network of a CDMA (Code Division Multiple Access) cellular system and other type of cellular system, and more particularly, to a method of handoff for a mobile terminal used in a combined mobile communication network in which a communication service is offered by the CDMA cellular system and other type of cellular system, such as a TDMA (Time Division Multiple Access) cellular system or an analogue cellular system.

Technologies relating to the mobile communication progress so rapidly in recent years. It started by the analogue cellular system which provides radio communication service area by analogue signals, and now, the digital cellular system, whose service area is covered by digital signals, is popular. Also in the digital cellular system, a technical trend moves from the TDMA technology to the CDMA technology.

Under these circumstances, it is likely that the CDMA cellular system is newly introduced in the adjacent area where the analogue cellular system has already been installed and a combined mobile communication service is offered by using a combined mobile terminal which is applicable for both of the analogue cellular system and the CDMA cellular system.

In such a case, the handoff operation from the CDMA cellular system to the analogue cellular system by the conventional technology is only performed when there is no candidate base station for the handoff in the CDMA cellular system.

This is because that the handoff operation in the CDMA cellular system means not only changing a base station for continuing the mobile communication, but also establishing plural communication paths, as long as there are other base stations whose electric field intensity is received strongly enough at the mobile terminal, for improving communication quality by the site diversity effect. This type of handoff is so called a soft handoff, and this is one of special features of the CDMA cellular system. Once the mobile communication has been switched to the analogue cellular system, it is impossible to perform such soft handoff operation although it appears new base station of the CDMA cellular system whose electric field intensity is strong enough for the communication. Therefore, base stations of the CDMA cellular system have a priority to be used as much as possible, and the handoff operation to the analogue cellular system is executed only when no more base station of the CDMA cellular system is available near around.

Therefore, when the handoff operation from a base station of the CDMA cellular system to a base station of the analogue cellular system is commenced, it is usually performed at an edge area of the CDMA cellular system and a reception electric field intensity of a signal transmitted from the base station of the CDMA cellular system has completely deteriorated at the mobile terminal.

As the result, there is a concern in which a handoff instruction from the base station of the CDMA cellular system cannot be received at the mobile terminal if the mobile terminal has moved, during the handoff operation, to an area where radio signal from the base station of the CDMA cellular system cannot reach. This causes a failure of the handoff processing, and the communication is disconnected.

The present invention has been invented in view of the problem of the conventional technology as mentioned above, and it is an object of the present invention to provide a handoff method, which is capable of promoting a success rate of the handoff operation and maintaining stable communication quality, performed in the CDMA cellular system.

In order to achieve the above-described object, according to an aspect of the present invention, a handoff method in a combined mobile communication network constituted by a CDMA cellular system and other type of cellular system, for performing a handoff operation to the other type of cellular system in a cell of the CDMA cellular system, the method is:
executing a handoff operation to a base station of other type of cellular system when measured signal level of each adjacent base station reported by a mobile terminal, which has requested the handoff operation, satisfies optimum handoff conditions derived from actual measured signal levels from each of adjacent base stations at an optimum handoff position, which was predetermined in each cell of the CDMA cellular system, and stored in a base station control apparatus.

According to other aspect of the present invention, the handoff method comprises steps of:
(1) sending a handoff request signal from a mobile terminal with a report containing measured signal level of each adjacent base station of the cell when detecting measured signal level of a base station of the other type of cellular system exceeds predetermined handoff request level;
(2) comparing measured signal level of each adjacent base station with optimum conditions, predetermined and stored in a base station control apparatus, for judging suitability of handoff to the base station of the other type of cellular system; and
(3) executing the handoff operation to the base station of the other type of cellular system when measured signal level of each adjacent base station satisfies the optimum conditions defined in the base station control apparatus.

Further, according to other aspect of the present invention, the handoff method comprises steps of:
(1) predetermining an optimum handoff position, for performing a handoff operation to a base station of the other type of cellular system, in each cell of the CDMA cellular system;
(2) predetermining optimum handoff conditions, for judging suitability of the handoff operation to the base station of the other type of cellular system, by measuring signal levels from each of adjacent base stations at the optimum position;
(3) providing a database containing each cell number of the CDMA cellular system and corresponding the optimum handoff conditions in a base station control apparatus of the CDMA cellular system; and
(4) executing the handoff operation to the base station of the other type of cellular system when measured signal level of each adjacent base station reported by a mobile terminal, which has requested the handoff request to the base station of the other type of cellular system, satisfies the optimum handoff conditions stored in the database of the base station control apparatus.

Also, according to other aspect of the present invention, the handoff method comprises steps of:
(1) sending a handoff request signal from a mobile terminal with information of measured pilot signal levels received from each of adjacent base stations and corresponding pilot numbers when detecting any of measured pilot signal levels exceed predetermined handoff request level;
(2) finding whether a pilot number corresponding to the base station of the other type of cellular system is included in a candidate of handoff destination whose pilot signal level has exceeded the handoff request level;
(3) comparing measured pilot signal levels reported by the mobile terminal, when the pilot number corresponding to the base station of the other type of cellular system is included in the candidate of handoff destination, with optimum conditions, which have been predetermined by measuring signal levels from each of adjacent base stations at an optimum position to perform the handoff operation to the other type of cellular system and stored in a base station control apparatus, for judging suitability of handoff to the base station of the other type of cellular system; and
(4) executing the handoff operation to the base station of the other type of cellular system when the measured pilot signal level of the base station of the other type of cellular system reported by the mobile terminal satisfies the optimum conditions defined in the base station control apparatus.

An embodiment according to the present invention will be described with referring to the drawings, in which:
Fig. 1 is a view showing a constitution of a combined mobile communication network by the CDMA cellular system and the analogue cellular system in which an embodiment of the handoff method according to the present invention is used.
Fig. 2 is a flowchart for explaining the handoff method according to the present invention.
Fig. 3 is a diagram showing an example of a database of a handoff determining data to be used by the handoff method according to the present invention.

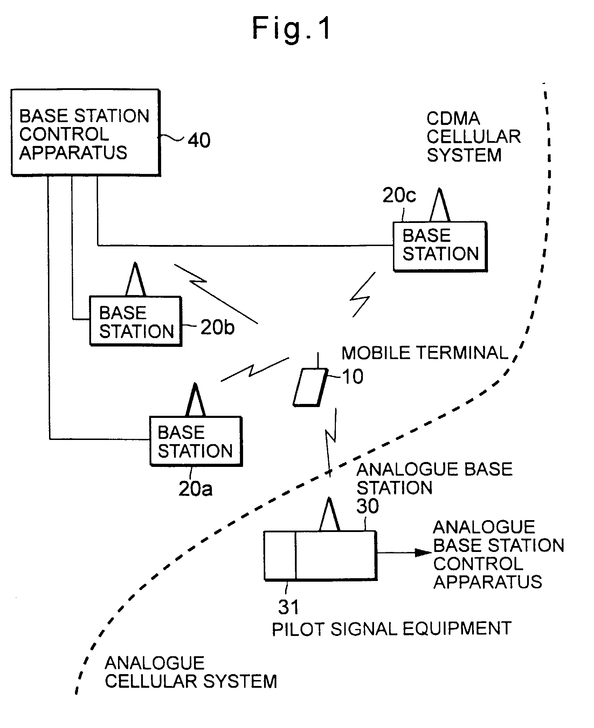

Fig. 1 is a view showing a constitution of a combined mobile communication network by the CDMA cellular system and the analogue cellular system in which an embodiment of the handoff method according to the present invention is used.

As shown in Fig. 1, the combined mobile communication network, in which the service area of the CDMA cellular system is located to adjacent to the service area of the analogue cellular system, is constituted by a mobile terminal 10 which is applicable for both of the cellular systems, digital base stations (herein-after called as CDMA base stations) 20a through 20c providing radio communication areas by the CDMA technology to the mobile terminal 10, an analogue base station 30 providing radio communication areas by the analogue technology to the mobile terminal 10, and a base station control apparatus 40 for controlling the CDMA base stations 20a through 20c. The analogue base station 30 is controlled by an analogue base station control apparatus which is not shown in Fig. 1.

Further, the analog base station 30 is installed with a pilot signal equipment 31 for transmitting a pilot signal which includes a pilot number as an identification of the analogue base station. The pilot signal is received at the mobile terminal 10 and a reception electric field intensity thereof is measured and informed to the base station control apparatus 40 via any of CDMA base stations currently communicating for a purpose of preparation of the handoff operation as described later.

The handoff operation in the CDMA cellular system is briefly explained.

The mobile terminal 10 is periodically measuring signal level of reception electric field intensity of each radio signal transmitted from the communicating CDMA base station and the adjacent CDMA base stations which was informed by the communicating CDMA base station at the time of commencement of the communication.

When measured signal level of reception electric field intensity of radio signal transmitted by a certain CDMA base station has increased, and has reached predetermined level (a handoff execution level) which is strong enough to execute handoff operation, a handoff request signal is transmitted from the mobile terminal 10 to the base station control apparatus 40 through the communicating CDMA base station. In accordance with the handoff request, the base station control apparatus 40 establishes a new communication path to the mobile terminal 10 from the CDMA base station whose reception electric field intensity at the mobile terminal 10 has reached the handoff execution level. As the result, the mobile terminal 10 can communicate by using two communication paths, and can obtain the site diversity effect which improves communication quality.

On the other hand, when measured signal level of reception electric field intensity of radio signal transmitted by a certain communicating CDMA base station has decreased, and has reached predetermined level (a handoff releasing level) which is weak enough to release handoff path, a handoff release request signal is transmitted from the mobile terminal 10 to the base station control apparatus 40 through the communicating CDMA base station. In accordance with the handoff release request, the base station control apparatus 40 releases the communication path to the mobile terminal 10 from the CDMA base station whose reception electric field intensity at the mobile terminal 10 has reached the handoff releasing level.

As described above, the handoff control operation in the CDMA cellular system can establish plural communication paths as long as the measured signal level of reception electric field intensity of radio signal is strong enough for communication, and releases the communication path when the measured signal level of reception electric field intensity of radio signal has become too weak to maintain the present communication.

An explanation will be given for a handoff method in the CDMA cellular system to the analogue cellular system as follows.

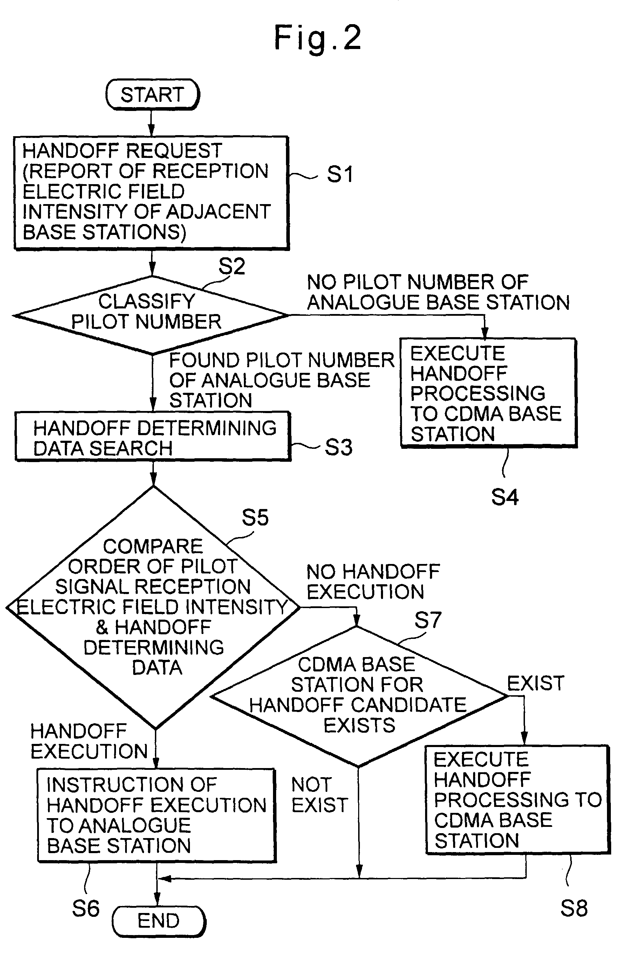

Fig. 2 is a flowchart for explaining the handoff method according to the present invention.

When a communication is carried out at frequency A between the mobile terminal 10 and the CDMA base stations 20a through 20c (an active-set state), the mobile terminal 10 measures signal level of reception electric field intensity of the pilot signal (frequency A) transmitted from the analogue base station 30 which is treated as one of adjacent base stations informed by adjacent base station information.

The adjacent base station information is one of information broadcasted by the communicating CDMA base station, and teaching the mobile terminal 10 various information relating to adjacent base stations, mainly for the handoff control operation purpose. Based on this adjacent base station information, the mobile terminal 10 periodically measures signal level of reception electric field intensity of radio signal from each base station, and when the reception electric field intensity of a certain base station has increased to reach a handoff request level, the mobile terminal 10 sends the handoff request signal to the base station control apparatus 40 for requesting an establishment of new communication path through the communicating base station, as foregoing explanation.

When the mobile terminal 10 requests the handoff operation, it also sends other related information for supporting the base station control apparatus 40 to execute the handoff operation. Reception electric field intensity information of each adjacent base station with a pilot number which identifies each adjacent base station is one of those information. Then, the base station control apparatus 40 discriminates which adjacent base station is the candidate of the handoff operation.

In Fig. 2, when the handoff request signal is received by the base station control apparatus 40 (step S1), as the handoff request signal includes reception electric field intensity information of each adjacent base station with a pilot number, the base station control apparatus 40 classifies pilot numbers and finds whether a pilot number of the analogue base station 30 is included as the handoff candidate base station or not (step S2).

If the pilot number of the analogue base station 30 is not included in the report of the handoff request, the base station control apparatus 40 executes ordinary handoff processing to the CDMA base station (step S4).

However, if the pilot number of the analogue base station 30 is included in the report of the handoff request, the base station control apparatus 40 executes the processing to confirm whether handoff to the analogue base station 30 is preferable or not in accordance with the following steps S3 and S5.

A handoff determining data is provided in the database of the base station control apparatus 40. The handoff determining data is prepared based on preset information which indicates necessary conditions for handoff to the analogue base station locating adjacent to a cell (or a CDMA base station area), and it is used for determining whether handoff operation to the analogue base station is preferable or not.

Total network conditions, including both CDMA cellular system and analogue cellular system, have been considered in the handoff determining data from the view point of maintaining quality of communication. Various types of conditions have been considered for preparing the information of the handoff determining data. Actual measurement of electric field intensities were carried out in each CDMA base station area, and an optimum position (or location) for handoff to adjacent analogue base station was determined in each CDMA base station area by actual measurement of electric field intensities with considerations of service area conditions (existence of adjacent CDMA base stations) and geographical shape conditions which might affect radio signal transmission. The handoff determining data was, then, prepared by considering number of CDMA base station adjacent to the optimum handoff position to the analogue base station, measurement result of electric field intensities transmitted from each of adjacent CDMA base stations and also the handoff candidate analogue base station.

That is, the handoff determining data indicates judging conditions required for handoff to the analogue base station in each CDMA base station area. Therefore, if the position, where the mobile terminal 10 has requested handoff to the analogue base station by measuring strong reception electric field intensity, is not the position preset in the handoff determining data, judgment result denies handoff to the analogue base station.

In another word, if judgment result by the handoff determining data denies the handoff to the analogue base station, it means that handoff to other CDMA base station can maintain quality of the present communication rather than performing handoff to the analogue base station, and if judgment result is affirmative, it means that handoff to the analogue base station can maintain quality of the present communication because any other suitable CDMA base stations are not located in such area.

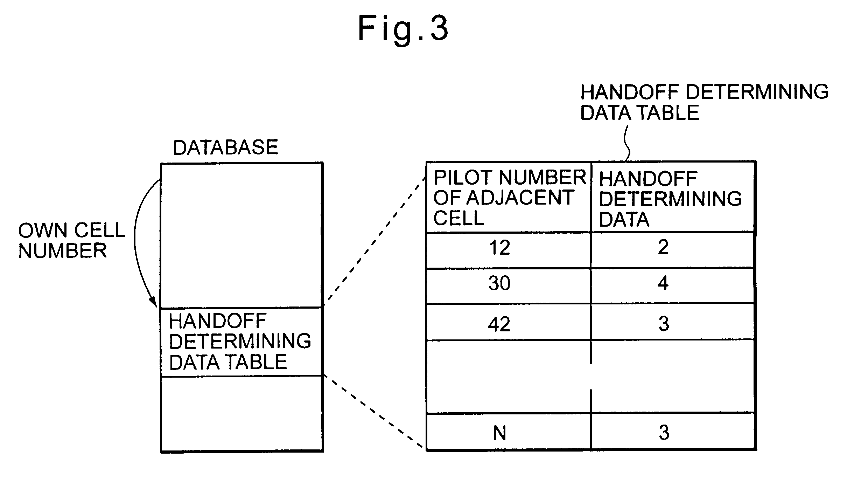

Actual data of the handoff determining data is shown in Fig. 3.

The handoff determining data for each CDMA base station area is provided in a database of the base station control apparatus 40, and the pilot number and corresponding handoff determining data are preset as described above. The handoff determining data indicates an order of strength of electric field intensity measured at the mobile terminal 10 which is locating at the optimum position for handoff to the analogue base station.

When the handoff request signal is transmitted from the mobile station 10, it also transmits a report of measured signal level of reception electric field intensity of radio signal from each adjacent base station. In the report of the mobile terminal 10 includes actual measured signal level, and the base station control apparatus 40 sorts them, and rearranges in the order of stronger level, and puts an order number in accordance with the stronger signal level. Therefore, the pilot number corresponding to the base station whose radio signal (pilot signal) has the strongest measurement result is given a measured data of "1", and, second strength is "2", and so on. And, each measured date is compared with the handoff determining data for determining suitability of handoff to the analogue base station in step S5 as described later.

Back to Fig. 2, processing of step S3 will be described.

Assuming that the mobile terminal 10 is currently communicating with the CDMA base stations 20a, the database of the base station control apparatus 40 is searched by a cell number of the CDMA base station 20a as an index key, and the set of handoff determining data for this cell is obtained. If the mobile terminal 10 is communicating with plural CDMA base stations 20a and 20b, the CDMA base station having the strongest reception electric field intensity at the mobile terminal 10 is treated as own cell. Assuming that this CDMA base station is the CDMA base station 20a, the cell number corresponding to the CDMA base station 20a is used for the index key of searching the database to obtain the set of the handoff determining data.

When the hand off determining data is retrieved from the database at step S3, the base station control apparatus 40 compares the reception electric field intensity of the pilot signal transmitted from each base station included in the report from the mobile terminal 10 as described above (the base station control apparatus 40 sorts reception electric field intensities of each of the pilot signals, and rearranges in the order of stronger level, and puts an order number in accordance with the signal level), and the measured data for the analogue base station 30 is compared with the handoff determining data.

At step S5, it is compared and determined whether the reception electric field intensity of the pilot signal of the analogue base station 30 meets the condition specified in the handoff determining data or not. More specifically, it is found whether the order of signal strength of the analogue base station 30 is within the order which is specified in the handoff determining data or not.

When it is found that the order of signal strength of the analogue base station 30 is within the order specified in the hand off determining data, the hand off operation to the analogue base station 30 is instructed to the mobile terminal 10 and the handoff to the analogue base station is executed (step S6).

On the other hand, when it is found that the order of signal strength of the analogue base station 30 is not within the order specified in the hand off determining data, it means that the handoff operation to the analogue base station is not suitable, and it is confirmed whether other candidate CDMA base station for handoff is existing or not (step S7). If there is the other candidate CDMA base station for handoff, the ordinary handoff processing in the CDMA cellular system is executed (step S8). If there is no other candidate CDMA base station for handoff, the handoff processing is not executed for this time of handoff request.

That is, the location of the mobile terminal 10 is confirmed by the handoff determining data whether the location is the correct position for handoff to the analogue base station or not. If the answer is "no", it means that it is wrong position to handoff to the analogue base station although strong signal level is measured for the pilot signal from the analogue base station.

An explanation will be given as follows by showing a specific example in respect of the handoff processing mentioned above.

Assume that the mobile terminal 10 is moving in a direction of approaching the analogue base station 30.

In the processing at step S3 shown in Fig. 2, when the reception electric field intensity of the signal transmitted from the CDMA base station 20a is the strongest, the handoff determining data corresponding to the CDMA base station 20a is retrieved for judgment in the following step S5.

Referring to Fig. 3, conditions for handoff determining in this cell are specified like this manner, that is, the base station having pilot number 12 (this is assumed as the analogue base station) is the second order of strong signal level, pilot numbers 42 and N are the same signal level and the third order, and pilot number 4 is the fourth order. This means that report from the mobile terminal 10 should have the same conditions as specified in the handoff determining data as long as the mobile terminal is locating at the optimum position for handoff to analogue base station in the cell of the CDMA base station 20a .

Next, it is determined at step S5 whether the handoff operation to the analogue base station 30 is suitable or not by referring to the handoff determining data.

Assuming that when the adjacent CDMA base stations are aligned in the order of signal strength reported by the mobile terminal 10, the digital base station 20a > the digital base station 20b > the digital base station 20c.

In this case, when the signal strength of the analogue base station 30 is larger than the signal strength of the CDMA base station 20b, a condition of the handoff determining data within "2" is satisfied and the handoff processing to the analogue base station 30 is executed.

In the execution of the handoff processing to the analogue base station 30, the reception electric field intensity of the signal of the CDMA base station 20a, which is currently communicating with the mobile terminal 10, is sufficiently large. Therefore, the handoff processing is performed without any difficulties such as the handoff instruction signal from the CDMA base station cannot be received at the mobile terminal 10.

Further, when the signal strength of the analogue base station 30 is smaller than the signal strength of the CDMA base station 20b, the condition of the handoff determining data is not satisfied and accordingly, the handoff processing to the analogue base station 30 is not carried out and the handoff processing of the ordinary CDMA cellular system is executed as far as other candidate CDMA base station is existing.

As has been explained, according to the present invention, the handoff operation to the analogue base station is executed only when actual conditions of reception signal strength from each adjacent base station satisfy the optimum conditions which have been predetermined and stored in the database of the base station control apparatus for each cell of the CDMA cellular system. In the execution of the handoff processing to the analogue base station, the mobile terminal can firmly continue the communication with the CDMA base station, which is currently communicating with the mobile terminal. Therefore, the handoff processing is performed without any difficulties such as the handoff instruction signal from the CDMA base station cannot be received at the mobile terminal. Thereby, the success rate of the handoff operation to the analogue base station can be promoted, and stable communication quality can be maintained in such a combined mobile communication network.

It has been explained in the embodiment of the present invention that the combined mobile communication network was constituted by the CDMA cellular system and the analogue cellular system. However, the present invention is not only limited to such a combined mobile communication network, but also can be applicable to other combined mobile communication network constituted by the CDMA cellular system and the TDMA type cellular system or a frequency hopping type cellular system.

Although the present invention has been fully described by way of the preferred embodiment thereof with reference to the accompanying drawings, various changes and modifications will be apparent to those having skill in this field. Therefore, unless these changes and modifications otherwise depart from the scope of the present invention, they should be construed as included therein.

## Claims

1. A handoff method in a combined mobile communication network constituted by a CDMA cellular system and other type of cellular system, for performing a handoff operation to the other type of cellular system in a cell of the CDMA cellular system, said method comprising:
executing a handoff operation to a base station of other type of cellular system when measured signal level of each adjacent base station reported by a mobile terminal, which has requested the handoff operation, satisfies optimum handoff conditions derived from actual measured signal levels from each of adjacent base stations at an optimum handoff position, which was predetermined in each cell of the CDMA cellular system, and stored in a base station control apparatus.

2. A handoff method in a combined mobile communication network constituted by a CDMA cellular system and other type of cellular system, for performing a handoff operation to the other type of cellular system in a cell of the CDMA cellular system, said method comprising:
sending a handoff request signal from a mobile terminal with a report containing measured signal level of each adjacent base station of the cell when detecting measured signal level of a base station of the other type of cellular system exceeds predetermined handoff request level;
comparing measured signal level of each adjacent base station with optimum conditions, predetermined and stored in a base station control apparatus, for judging suitability of handoff to the base station of the other type of cellular system; and
executing the handoff operation to the base station of the other type of cellular system when measured signal level of each adjacent base station satisfies the optimum conditions defined in the base station control apparatus.

3. According to claim 2, wherein, said optimum conditions are predetermined by measuring signal levels from each of adjacent base stations at an optimum position to perform the handoff operation to the other type of cellular system.

4. A handoff method in a combined mobile communication network constituted by a CDMA cellular system and other type of cellular system, for performing a handoff operation to the other type of cellular system in a cell of the CDMA cellular system, said method comprising:
predetermining an optimum handoff position, for performing a handoff operation to a base station of the other type of cellular system, in each cell of the CDMA cellular system;
predetermining optimum handoff conditions, for judging suitability of the handoff operation to the base station of the other type of cellular system, by measuring signal levels from each of adjacent base stations at said optimum position;
providing a database containing each cell number of the CDMA cellular system and corresponding said optimum handoff conditions in a base station control apparatus of the CDMA cellular system; and
executing the handoff operation to the base station of the other type of cellular system when measured signal level of each adjacent base station reported by a mobile terminal, which has requested the handoff request to the base station of the other type of cellular system, satisfies the optimum handoff conditions stored in the database of the base station control apparatus.

5. A handoff method in a combined mobile communication network constituted by a CDMA cellular system and other type of cellular system, for performing a handoff operation to the other type of cellular system in a cell of the CDMA cellular system, said method comprising:
sending a pilot signal from a base station of the other type of cellular system for identifying a type of cellular system;
sending a handoff request signal from a mobile terminal with a report of measured signal levels received from each of adjacent base stations when detecting measured signal level of the pilot signal of the base station of the other type of cellular system exceeds predetermined handoff request level;
comparing measured signal levels reported by the mobile terminal with optimum conditions, predetermined and stored in a base station control apparatus, for judging suitability of handoff to the base station of the other type of cellular system; and
executing the handoff operation to the base station of the other type of cellular system when measured signal levels reported by the mobile terminal satisfy the optimum conditions defined in the base station control apparatus.

6. According to claim 5, wherein, said optimum conditions are predetermined by measuring signal levels from each of adjacent base stations at an optimum position to perform the handoff operation to the other type of cellular system.

7. A handoff method in a combined mobile communication network constituted by a CDMA cellular system and other type of cellular system, for performing a handoff operation to the other type of cellular system in a cell of the CDMA cellular system, said method comprising:
sending a handoff request signal from a mobile terminal with information of measured pilot signal levels received from each of adjacent base stations and corresponding pilot numbers when detecting any of measured pilot signal levels exceed predetermined handoff request level;
finding whether a pilot number corresponding to the base station of the other type of cellular system is included in a candidate of handoff destination whose pilot signal level has exceeded the handoff request level;
comparing measured pilot signal levels reported by the mobile terminal, when the pilot number corresponding to the base station of the other type of cellular system is included in the candidate of handoff destination, with optimum conditions, which have been predetermined by measuring signal levels from each of adjacent base stations at an optimum position to perform the handoff operation to the other type of cellular system and stored in a base station control apparatus, for judging suitability of handoff to the base station of the other type of cellular system; and
executing the handoff operation to the base station of the other type of cellular system when the measured pilot signal level of the base station of the other type of cellular system reported by the mobile terminal satisfies the optimum conditions defined in the base station control apparatus.
